# EUROPEAN PATENT APPLICATION

(11) **EP 4 517 746 A1**
(43) Date of publication of application: **05.03.2025**
(21) Application number: 23795897.0
(22) Date of filing: 01.03.2023
(51) Int. Cl.: G10L 15/32, G10L 25/51

(54) **INFORMATION PROCESSING DEVICE, INFORMATION PROCESSING METHOD, AND COMPUTER PROGRAM**

(30) Priority: 26.04.2022 JP 2022072123
(71) Applicant: Sony Group Corporation, Tokyo 108-0075 (JP)
(72) Inventor: REKIMOTO, Junichi, Tokyo 141-0022 (JP)
(74) Representative: 2SPL Patentanwälte PartG mbB
(86) International application number: PCT/JP2023/007479
(87) International publication number: WO 2023/210149

(57) **Abstract**

Provided is an information processing device that performs processing related to voice input.

The information processing device includes: a classification unit that classifies an uttered voice into a normal voice and a whisper on the basis of a voice feature amount; a recognition unit that recognizes a whisper classified by the classification unit; and a control unit that controls processing based on a recognition result of the recognition unit. The information processing device further includes a normal voice recognition unit that recognizes a normal voice classified by the classification unit, in which the control unit performs processing corresponding to a recognition result of a whisper by the recognition unit on a recognition result of the normal voice recognition unit.

## Description

### TECHNICAL FIELD

The technology disclosed in the present specification (hereinafter, referred to as "the present disclosure") relates to an information processing device, an information processing method, and a computer program that perform voice processing.

### BACKGROUND ART

Speech recognition is widely used. Speech recognition is also used for transcription of converting utterance content into text, but the original utterance content does not necessarily include only characters, and may include, for example, symbols such as punctuation and quotation marks, and an editing command for input text (alternatively, there may be a case where a speaker wants to instruct symbol input or an editing command). However, in a normal speech recognition technology, it is difficult to distinguish between text input and symbol input or an editing command. For example, when ┌ mountain ┘ is input by uttering "square bracket, mountain, close square bracket", the utterance may be input as it is. A command such as "delete one line" is also directly input as text.

It is also conceivable to determine in advance a rule for inputting a symbol to be frequently used such as inputting ┌ in a case where square bracket is uttered, but this time, there is no means when it is desired to input square bracket. Furthermore, it is necessary for the user to grasp in advance which utterance is input as text and which utterance is input as a symbol or a command, which is a burden on the user.

For example, there has been proposed an apparatus that selects an end symbol assignment norm corresponding to a situation in which a dialogue has been performed from among a plurality of end symbol assignment norms on the basis of the dialogue situation feature, and estimates the end symbol for the speech recognition result text of the dialogue by using the selected end symbol assignment norm, the acoustic feature and the language feature of the dialogue (see Patent Document 1). However, this apparatus can only assign punctuation marks to the speech recognized text, and cannot input symbols in the text such as square brackets.

### SUMMARY OF THE INVENTION

### PROBLEMS TO BE SOLVED BY THE INVENTION

An object of the present disclosure is to provide an information processing device, an information processing method, and a computer program that perform processing related to voice input.

### SOLUTIONS TO PROBLEMS

The present disclosure has been made in view of the above problems, and a first aspect thereof is
an information processing device including:
a classification unit that classifies an uttered voice into a normal voice and a whisper on the basis of a voice feature amount;
a recognition unit that recognizes a whisper classified by the classification unit; and
a control unit that controls processing based on a recognition result of the recognition unit.

The classification unit is configured to perform classification between a normal voice and a whisper using a first learned neural network, and the recognition unit is configured to recognize a whisper using a second learned neural network. For example, the second learned neural network includes a feature extraction layer and a transformer layer, and the first learned neural network is configured to share the feature extraction layer with the second learned neural network.

The information processing device according to the first aspect further includes a normal voice recognition unit that recognizes a normal voice classified by the classification unit, in which the control unit is configured to perform processing corresponding to a recognition result of a whisper by the recognition unit on a recognition result of the normal voice recognition unit. Specifically, the control unit executes processing of a whisper command recognized by the recognition unit on a text obtained by converting a normal voice by the normal voice recognition unit.

Furthermore, a second aspect of the present disclosure is
an information processing method including:
a classification step of classifying an uttered voice into a normal voice and a whisper on the basis of a voice feature amount;
a recognition step of recognizing a whisper classified in the classification step; and
a control step of controlling processing based on a recognition result in the recognition step.

Furthermore, a third aspect of the present disclosure is
a computer program written in a computer-readable format for causing a computer to function as:
a classification unit that classifies an uttered voice into a normal voice and a whisper on the basis of a voice feature amount;
a recognition unit that recognizes a whisper classified by the classification unit; and
a control unit that controls processing based on a recognition result of the recognition unit.

The computer program according to the third aspect of the present disclosure defines a computer program written in a computer-readable format in such a way as to achieve certain processing in the computer. In other words, by installing the computer program according to the third aspect of the present disclosure in the computer, the computer can perform a cooperative operation and produce effects similar to those produced by the information processing device according to the first aspect of the present disclosure.

### EFFECTS OF THE INVENTION

According to the present disclosure, it is possible to provide an information processing device, an information processing method, and a computer program that process a voice including a whisper.

Note that the effects described in the present specification are merely examples, and the effects to be brought by the present disclosure are not limited thereto. Furthermore, the present disclosure may further provide additional effects in addition to the effects described above in some cases.

Still other objects, features, and advantages of the present disclosure will become apparent from a more detailed description based on embodiments as described later and the accompanying drawings.

### BRIEF DESCRIPTION OF DRAWINGS

Fig. 1 is a diagram illustrating a basic configuration of a voice input system 100 to which the present disclosure is applied.
Fig. 2 is a diagram showing spectrograms for frequency bands of a normal voice and a whisper.
Fig. 3 is a diagram illustrating an operation of the voice input system 100.
Fig. 4 is a diagram illustrating an overall structure of a system for performing whisper recognition using a neural network.
Fig. 5 is a diagram showing results of classification samples of a whisper and a normal voice.
Fig. 6 is a diagram illustrating a result of two-dimensional representation of a situation in which feature vectors are processed in a classification unit 101 by performing dimension reduction on the basis of the t-SNE algorithm.
Fig. 7 is a diagram illustrating another neural network configuration example of the classification unit 101.
Fig. 8 is a diagram illustrating a specific operation example of a voice input process using the voice input system 100 according to the present disclosure.
Fig. 9 is a diagram illustrating a specific operation example of the voice input process using the voice input system 100 according to the present disclosure.
Fig. 10 is a diagram illustrating a specific operation example of the voice input process using the voice input system 100 according to the present disclosure.
Fig. 11 is a diagram illustrating a specific operation example of the voice input process using the voice input system 100 according to the present disclosure.
Fig. 12 is a diagram illustrating a specific operation example of the voice input process using the voice input system 100 according to the present disclosure.
Fig. 13 is a diagram illustrating a specific operation example of the voice input process using the voice input system 100 according to the present disclosure.
Fig. 14 is a diagram illustrating a specific operation example of the voice input process using the voice input system 100 according to the present disclosure.
Fig. 15 is a diagram illustrating a specific operation example of the voice input process using the voice input system 100 according to the present disclosure.
Fig. 16 is a diagram illustrating an operation example in a case where the present disclosure is applied to a teleconference.
Fig. 17 is a diagram illustrating a functional configuration example of a conference terminal 1700.
Fig. 18 is a diagram illustrating a functional configuration example of an avatar control system 1800.
Fig. 19 is a diagram illustrating a functional configuration example of a mask-type wearable interface 1900.
Fig. 20 is a diagram illustrating a configuration example of an information processing device 2000.

### MODE FOR CARRYING OUT THE INVENTION

Hereinafter, the present disclosure will be described in the following order with reference to the drawings.

A. Outline
B. Basic Configuration
C. Use of Whispering
D. Recognition Architecture
   D-1. Recognition of Whispering
   D-2. Classification of Whispers
   D-3. Data Set for Training
E. Application to Interaction System
F. Other Applications
   F-1. Use of Whisper Commands in Teleconference
   F-2. Control of a Plurality of Avatars
   F-3. Combination with Silent Speech
G. Comparison with Prior Art
H. Configuration of Information Processing Device
I. Conclusions

### A. Outline

Automatic speech recognition (ASR) has been already used in various applications ranging from operations of devices such as smart speakers and car navigation systems to text input approaches. Voice input does not require a special input device other than a microphone, and thus can be operated in a hands-free manner. Moreover, since voice based text input is much faster than type input, voice input is also used to write ideas or to quickly enter a draft of a document.

However, the speech recognition has a problem of a recognition error. Since it is difficult to correct the speech misrecognition by an utterance command and it is necessary to correct the recognition error by using a keyboard or a mouse, the advantages of the hands-free operation are lost. Furthermore, in a case where text is input by using voice, a problem occurs when special characters such as symbols other than normal text and commands are input by voice. For example, in a case where "?" is input, "?" can be said as "question mark", but "question mark" by itself may be input as text instead of the symbol "?". If you want to start a new paragraph and say "new paragraph", it may be literally recognized and entered as the text "new paragraph". Similar problems can occur when commands such as "delete word" and "new paragraph", which are often used in text editing, are input.

For example, when the word "line feed" is uttered, it can be agreed in advance that the word means not a text input but a line feed command at all times, but in this case, "line feed" cannot be input as text. Moreover, it is a burden for the user to memorize all words defined as utterance commands.

The voice uttered by the user includes a text input and an utterance command, and there is no simple method of distinguishing the command and the text input from the voice in the conventional automatic speech recognition. A keyboard input on a computer allows text input, and also allows a command to be input by pressing a modifier key such as a Shift key, a Control key, or an Alt key simultaneously with an alphanumeric key. For example, the modality at the time of voice input may be switched by inputting with a modifier key, but the advantage of the hands-free operation is lost.

Therefore, in the present disclosure, a plurality of meanings is given to utterances with a whisper and a normal voice. Specifically, the present disclosure proposes an information processing device that classifies an uttered voice into a normal voice and a whisper on the basis of a voice feature amount, recognizes the classified whisper, and controls processing related to a portion of the normal voice in the original uttered voice on the basis of the recognition result. The information processing device according to the present disclosure can realize voice input by complete hands-free operation without requiring special hardware other than a normal microphone.

For example, in a case where the present disclosure is applied to the speech recognition, text input is performed using a normal voice portion of input voice, while a whisper is classified from the input voice, and a recognition result of the whisper can be used as input of symbols such as a period, a comma, and a quotation mark or special characters, or a command on text editing such as deletion of text and line feed. That is, by applying the present disclosure to the speech recognition, text can be input by normal voice, while non-text information such as commands can be input by whispering.

### B. Basic Configuration

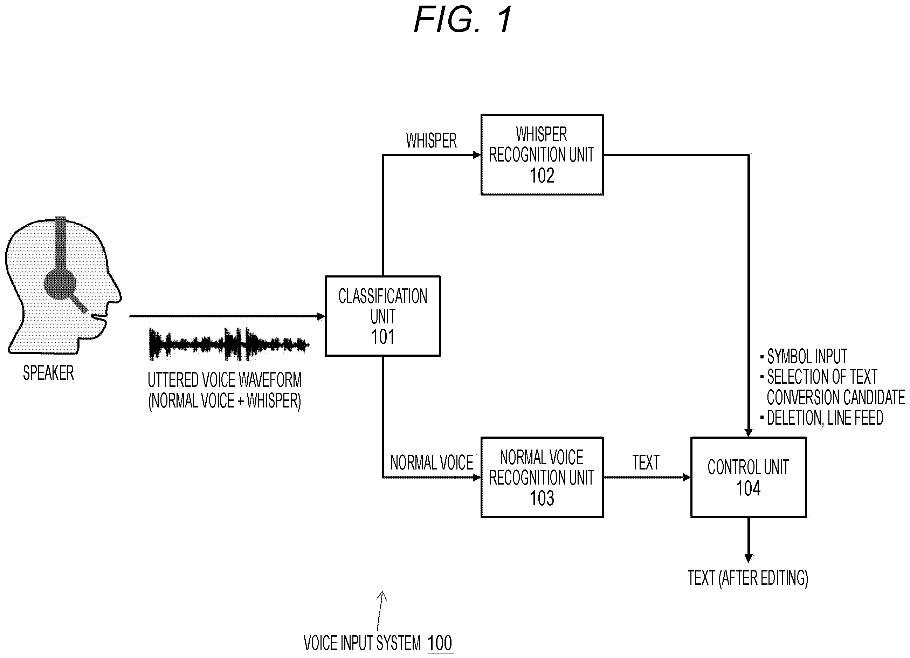

Fig. 1 schematically illustrates a basic configuration of a voice input system 100 to which the present disclosure is applied. The voice input system 100 is a system that gives a plurality of meanings to utterances with a whisper and a normal voice. The voice input system 100 can be configured using a general information processing device such as a personal computer (PC), for example, and does not require a special input device other than a microphone for voice input. The general information processing device includes an input device, such as a keyboard or a mouse, by which the user performs an input operation, but it is not necessary to use an input device other than a microphone to perform voice input according to the present disclosure.

The voice input system 100 illustrated in Fig. 1 includes a classification unit 101, a whisper recognition unit 102, a normal voice recognition unit 103, and a control unit 104.

The voice uttered by the user is input to the voice input system using a microphone (or a headset). The classification unit 101 classifies the input voice into a normal voice and a whisper on the basis of the voice feature amount. The input voice includes a normal voice section, a whisper section, and a silence section. Therefore, the classification unit 101 attaches a mark for identifying each of the normal voice section and the whisper section to the input voice signal, and outputs the input voice signal to each of the whisper recognition unit 102 and the normal voice recognition unit 103 in the subsequent stage.

The normal voice recognition unit 103 executes normal voice recognition processing using only the normal voice section among time-series voice signals input from the classification unit 101 and converts the voice signal into text.

The whisper recognition unit 102 executes whisper recognition processing using only the whisper section among the voice signals input from the classification unit 101, and converts the voice signal into non-text information such as a symbol, a special character, or an editing command (deletion of text, line feed, or the like) for the text input by normal voice.

Then, the control unit 104 performs processing based on the non-text information output from the whisper recognition unit 103 on the text output from the normal voice recognition unit 102. For example, in a case where the voice input system 100 is used as a text input system, the control unit 104 executes a command such as input of a symbol or a special character input in a whisper to a corresponding part in the text, selection of a text conversion candidate specified in a whisper, deletion or a line feed input in a whisper, or the like, with respect to the text input as a normal voice.

Certainly, the voice input system 100 can also be applied to potential applications other than text input, but details are provided below.

In order to implement the voice input system 100 to which the present disclosure is applied, two new neural networks are used. One is a neural network for distinguishing between a normal voice and a whisper used in the classification unit 101. The other is a neural network for recognizing a whisper used in the whisper recognition unit 102. Details of each neural network will be described in the subsequent Section D.

In a variety of situations where the speech recognition is already available, the present disclosure may be widely utilized. In one example implementation of the present disclosure, an existing speech recognition system (for example, Cloud Speech-to-Text of Google Inc.) is used to perform normal voice recognition, and a customized neural network is used to recognize a whisper. The former normal voice recognition is trained on a large corpus and is speaker agnostic and can be used without special training. In contrast, the whisper recognition portion lacks an existing large corpus and thus training must be done in a smaller corpus, and requires a training phase where individual users for speaker adaptation (that is, customization) are required to read example sentences in a whisper.

In the future, as interaction based on whispering becomes widespread, it is expected that a data set of whispers can be acquired from a use history. As a result, it is expected that whisper voice recognition can be used in a speaker independent method.

### C. Use of Whispering

Whispering is an utterance mode that can be pronounced by many people without special training, and many people can freely use a normal voice and a whisper during an utterance. This is one reason for using whispering as another voice input mode of normal voice in the present disclosure.

Examples of the utterance mode that can be pronounced by a person include switching of pitch of a voice in addition to normal voice and whispering. However, it is a burden for a person to utter at a high pitch, and a threshold value of the pitch has individual differences. That is, switching of the pitch of the voice is unnatural for a person, and it is difficult to distinguish switching of the pitch from a normal voice on a system side to which the voice is input. On the other hand, even if the volume of a whisper is forcibly increased, it does not become the same as a normal voice. In short, a person can easily use both a whisper and a normal voice, and it is easy to distinguish a whisper from a normal voice on a system side to which the voice is input.

In general, a normal voice is used as a voice when the user normally speaks, whereas a whisper is a voice used when the user talks in secret. Voice pronunciation methods are different between a normal voice and a whisper. Specifically, when a normal voice is output, human vocal cords exhibit regular and periodic vibration, and such a vibration frequency is called a fundamental frequency. On the other hand, in the case of speaking in a whisper, the vibration of the vocal cords is inconspicuous and exhibits irregular and random vibration, that is, it can be said that there is no fundamental frequency. Therefore, even if the volume of a whisper is forcibly increased, it does not become the same as a normal voice.

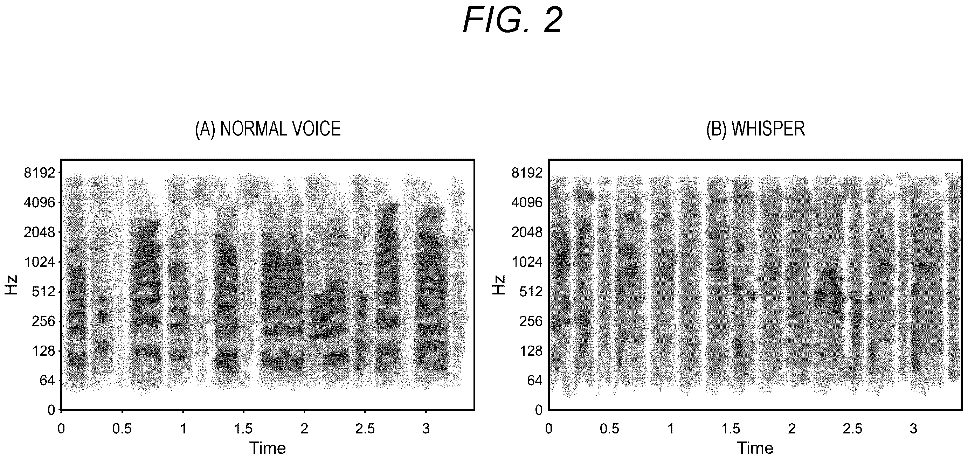

Figs. 2(A) and 2(B) show spectrograms for frequency bands of each voice of a normal voice and a whisper. However, this is a case where the speaker utters the same phrase "A quick brown fox jumps over the lazy black dog." in a normal voice and in a whisper. The vocal cords exhibit regular and periodic vibration when the speaker utters in a normal voice, whereas the vocal cords hardly vibrate when the speaker utters in a whisper. The difference between the patterns of the spectrograms of the vocal cords is obvious at a glance due to such a difference in biological phenomenon. Pattern recognition is one of the main applications of a neural network, and frequency spectrograms of a normal voice and a whisper can be accurately identified in real time by utilizing the neural network.

Therefore, in order to implement the voice input system 100 to which the present disclosure is applied, two new neural networks are used. One is a neural network for distinguishing between a normal voice and a whisper used in the classification unit 101. The other is a neural network for recognizing a whisper used in the whisper recognition unit 102.

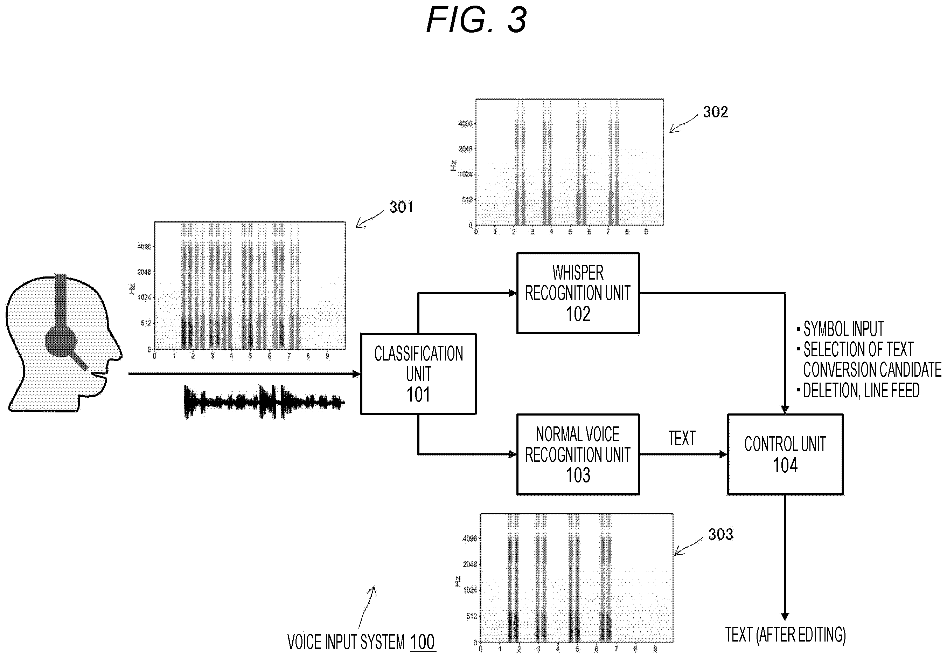

Fig. 3 illustrates the operation of the voice input system 100 illustrated in Fig. 1 from the viewpoint of recognizing a frequency spectrogram using the neural network.

A voice of a speaker in which a normal voice and a whisper are mixed, the voice being indicated by a reference numeral 301, is input to the voice input system 100 The classification unit 101 using a first neural network classifies whether the input voice is a normal voice or a whisper in a predetermined time unit (for example, every 100 milliseconds).

The whisper recognition unit 102 performs recognition processing on a section classified as a whisper indicated by a reference numeral 302 in the input voice using a second neural network. Furthermore, the normal voice recognition unit 103 performs normal voice recognition processing on a section classified as a normal voice indicated by a reference numeral 303 in the input voice using a third neural network.

For example, in a case where the voice input system 100 is applied to text editing, the normal voice recognition unit 103 converts a voice in the normal voice section into text. Furthermore, the whisper recognition unit 102 performs recognition processing on the whisper section, and converts a voice in the whisper section into non-text information such as a symbol, a special character, and an editing command (deletion of text, line feed, or the like) for the text input by normal voice. Then, the control unit 104 performs processing based on the non-text information output from the whisper recognition unit 103 on the text output from the normal voice recognition unit 102.

The voice input system 100 can give a plurality of meanings to utterances with a whisper and a normal voice. For example, saying "line feed" in a normal voice means to input the text, but saying "line feed" in a whisper means to call a line feed command. Similarly, in order to correct the recognition error, the user can whisper "candidate" to display alternative recognition candidates and select one of the candidates by whispering the number ("1", "2", etc.) attached to the candidate.

The conventional speech recognition method can be compared to a keyboard that does not include a command key or a symbol key. Similarly to character input, a keyboard used for operating a computer is provided with function keys, command keys, symbol keys, and other means for inputting commands. These functions can be called without explicitly changing the interaction mode or releasing the keyboard. That is, in the computer keyboard, text input and command input coexist without a special mode-conversion operation. On the other hand, by using the voice input system 100, a relationship between a normal voice and a whisper can be compared to a relationship between text input and command input. In the voice input system 100, the user uses a normal voice and a whisper properly, so that text input and command input coexist by hands-free operation.

### D. Recognition Architecture

In this Section D, a configuration of a neural network capable of recognizing and classifying a whisper in the voice input system 100 to which the present disclosure is applied will be described.

### D-1. Recognition of Whispering

In the best mode of the present disclosure, wav2vec2.0 (see Non-Patent Document 1 and Non-Patent Document 2) or HuBERT (see Non-Patent Document 3) is used for recognizing a whisper (that is, the whisper recognition unit 102). wav3ves2.0 and HuBERT are both self-supervised neural networks designed for voice processing systems.

Both wav2vec2.0 and HuBERT assume a combination of pre-training, self-supervised representation learning using unlabeled audio data, and fine tuning using labeled audio data. These systems are mainly targeted for speech recognition applications, but are also applied to speaker recognition, language recognition, and emotion recognition.

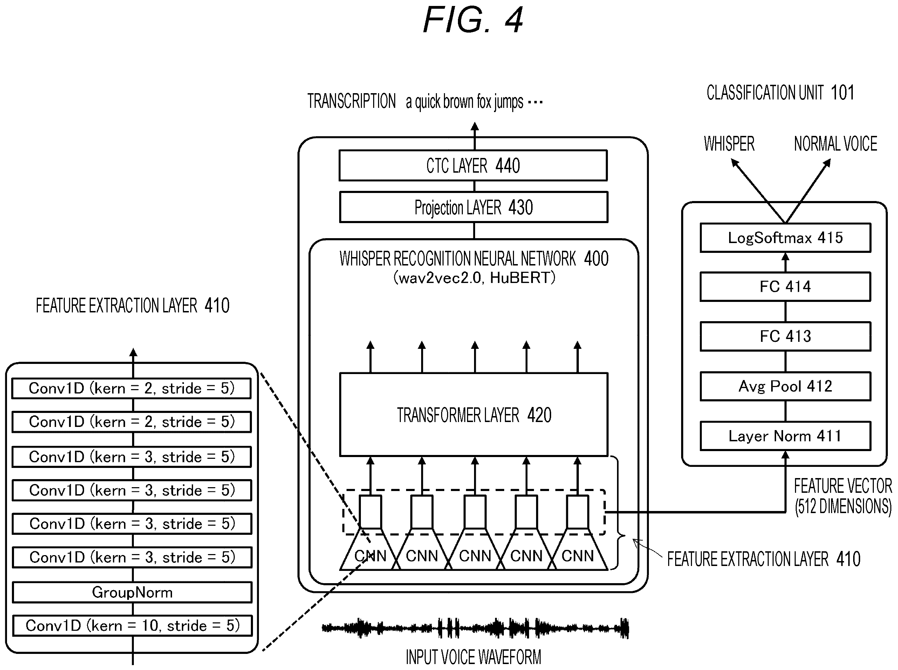

In the center of Fig. 4, the entire structure of a system (a whisper recognition neural network 400) that performs whisper recognition configured using a neural network is illustrated. In the illustrated system, the neural network 400 configured using wav2vec2.0 or HuBERT can be roughly divided into a feature extraction layer 410 and a transformer layer 420.

The method of pre-training in the whisper recognition neural network 400 is similar to the masked language model of BERT in natural language processing. The masked language model is designed to mask a portion of the input and to estimate its corresponding representation feature (feature vector) from the remaining input. With this pre-training, the acoustic characteristics and the voice characteristics of the input data can be learned.

In contrast to the pre-training, fine tuning, which requires textual labels for acoustic data, requires only a small amount of data. A projection layer 430 and a connectionist temporal classification (CTC) layer 440 are further added to the output of the neural network 400 for whisper recognition including WAV2vec 2.0 or HuBERT illustrated in Fig. 4, and the neural network 400 is configured so that transcription of a text can be generated from a voice waveform.

The whisper recognition neural network 400 illustrated in Fig. 4 can realize speech recognition accuracy comparable to the conventional state-of-the-art ASR by fine tuning using only a small amount of labeled voice data set (see Non-Patent Document 1 and Non-Patent Document 2). Therefore, this architecture is considered to be suitable for recognizing a whisper under a limited whisper corpus.

Although there are many corpuses of normal voice, there are only a few corpuses of whispering, such as wTIMIT (see Non-Patent Document 4). Therefore, in the present embodiment, a learning method is adopted in which fine tuning by whispering is further performed on the whisper recognition neural network 400 pre-trained with a normal voice corpus. See the subsequent Section D-3 for details.

The feature extraction layer 410 converts a raw voice waveform into a potential feature vector. In the example illustrated in Fig. 4, the feature extraction layer 410 includes a plurality of (for example, five) convolutional neural networks (CNN). Section data obtained by dividing a voice waveform signal pronounced by the user for each time section of a predetermined length is input to each CNN. However, the voice waveform signal is divided into each section data so as to include an overlapping region in adjacent time sections.

In the left of Fig. 4, the configuration of each CNN in the feature extraction layer 410 is illustrated. Each CNN includes seven blocks of one-dimensional convolutional layers (Conv1D) and temporal convolutional layers (GroupNorm), similar to the original wav2vec2 and HuBERT. Each block has 512 channels including a stride (5,2, 2, 2, 2, 2, 2) and a kernel width (10,3, 3, 3, 3, 2, 2). The feature extraction layer 410 is designed so as to output 512 latent dimensional feature vectors every 20 milliseconds.

### D-2. Classification of Whispers

The classification unit 101 distinguishes between whispering and normal voice input by a voice signal having a fixed length (100 milliseconds or the like). In the right of Fig. 4, the configuration of the feature extraction layer 410 in the whisper recognition neural network 400 including the wav2vec2.0 or HuBERT is illustrated in detail. The feature extraction layer 410 converts an acoustic signal into a 512 dimensional feature vector every 20 milliseconds. The classification unit 101 partially shares the neural network (that is, the feature extraction layer 410) with the whisper recognition neural network 400, thereby reducing the network size of the entire voice input system 100.

The classification unit 101 shares a portion surrounded by a broken line in the feature extraction layer 410 in the whisper recognition neural network 400 illustrated in the center of Fig. 4 with the whisper recognition neural network 400. In the right of Fig. 4, the inside of the classification unit 101 is illustrated in an enlarged manner. The classification unit 101 can acquire a classification of a normal voice and a whisper from a voice waveform signal by sequentially applying a normalization layer (Layer Norm) 411, an average pooling layer (Avg Pool) 412, following two fully connected (FC) layers 413 and 414, and a LogSoftmax layer 415 as an output layer of multi-class classification to a feature vector extracted from the voice waveform signal.

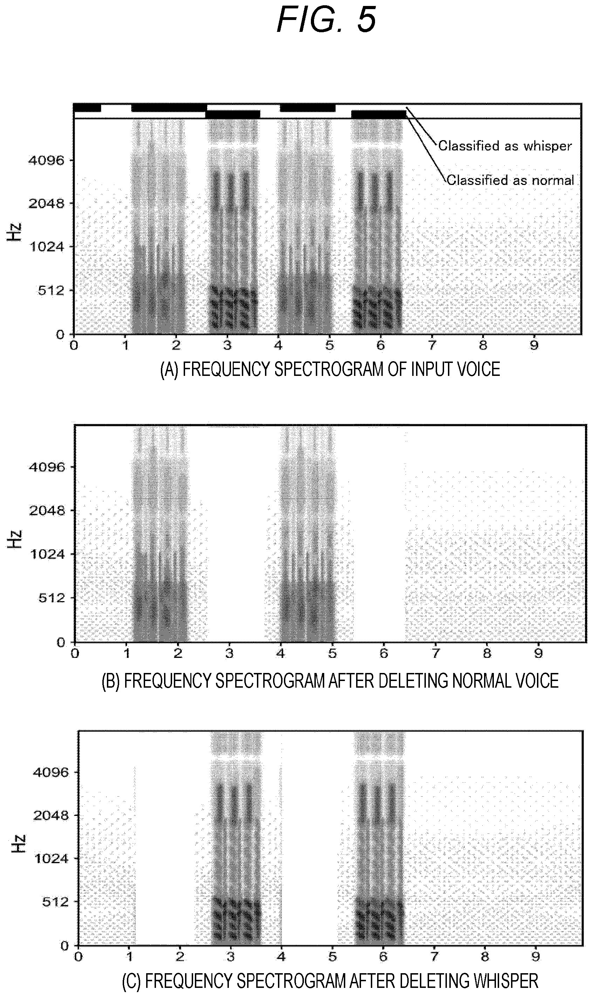

Fig. 5 illustrates a result of a classification sample of a whisper and a normal voice acquired by the classification unit 101 illustrated in the right of Fig. 4 using a frequency spectrum.

The voice waveform signal input to the voice input system 100 includes a whisper section, a normal voice section, and a silent section. First, as illustrated in Fig. 5(A), the classification unit 101 identifies a whisper section from the frequency spectrogram of the input voice waveform signal and marks the section as "Classified as whisper", and identifies a normal voice section and marks the section as "Classified as normal".

Then, on the basis of the mark of "Classified as normal", the classification unit 101 generates an acoustic stream from which a normal voice as illustrated in Fig. 5(B) has been deleted, and outputs the acoustic stream to the whisper recognition unit 102 in the subsequent stage. Furthermore, on the basis of the mark of "Classified as whisper", the classification unit 101 generates an acoustic stream from which a whisper as illustrated in Fig. 5(C) has been deleted, and outputs the acoustic stream to the normal voice recognition unit 103 in the subsequent stage.

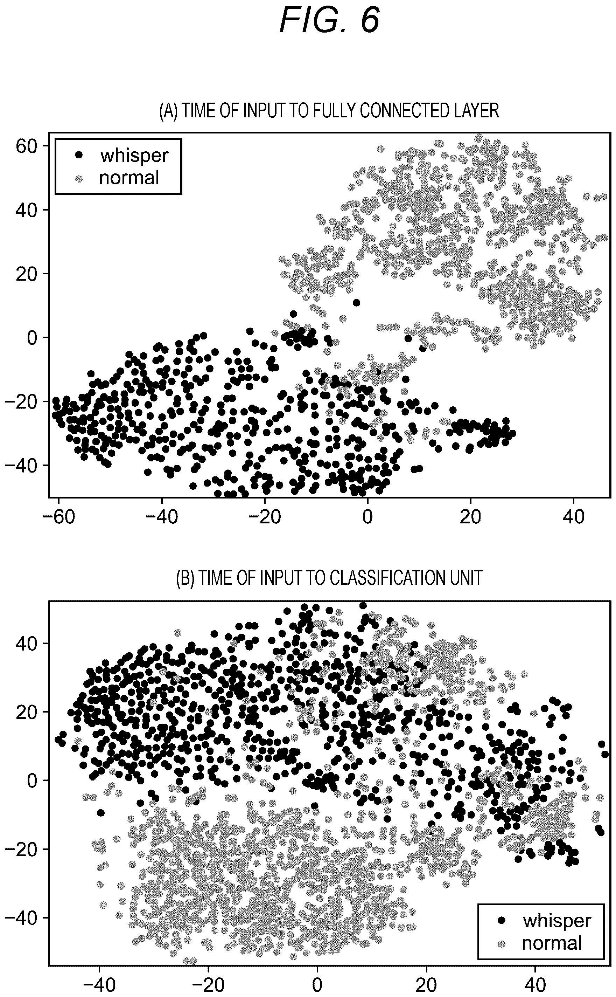

Fig. 6(A) illustrates a result of two-dimensional representation of a 512 dimensional feature vector classified as an input to the second fully connected (FC) layer 414 together with a feature vector at the time of input to the first normalization layer on the basis of a visualization method by a dimension reduction algorithm called t-SNE(t-Distributed Stochastic Neighbor Embedding). When Fig. 6(A) is compared with the time of input to the normalization layer 411 illustrated in Fig. 6(B) and the time of input to the second fully connected (FC) layer 414, it can be seen that the feature vector of normal utterance and the feature vector of whispering are well distinguished by the processing in the classification unit 101.

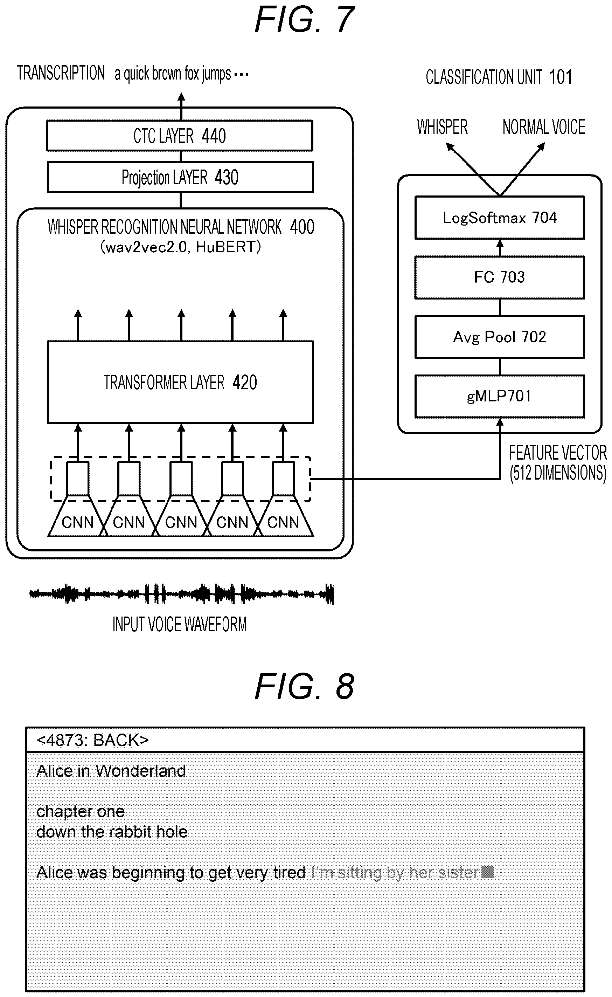

Fig. 7 illustrates another configuration example of the classification unit 101 shared with the feature extraction layer 410 in the whisper recognition neural network 400. Similarly to the configuration example illustrated in the right of Fig. 4, the illustrated classification unit 101 can acquire a classification of a normal voice and a whisper from a voice waveform signal by sequentially applying a normalization layer gMLP701, an average pooling layer (Avg Pool) 702, a fully connected (FC) layers 703, and a LogSoftmax layer 704 as an output layer of multi-class classification to a feature vector extracted from the voice waveform signal. Note that gMLP (multi-layer perceptron with gating) is a deep learning model published by Google Brain, and is considered to have performance comparable to that of a transformer without using an attention mechanism only by combining a gate mechanism with a multi-layer perceptron.

### D-3. Data Set for Training

Regarding the training of the whisper recognition neural network 400, first, a neural network that has been pre-trained and fine-tuned using normal voice data is started. Specifically, a Librispeech dataset (see Non-Patent Literature 5) is used as normal voice data, and 960 hours of training using normal voice is performed. Note that pre-training does not require teacher data (text corresponding to voice), but only requires voice data.

Subsequently, fine tuning of the whisper recognition neural network 400 is further performed using two types of whisper data sets, wTIMIT and Per-user database.

Here, wTIMIT (whisper TIMIT) is a corpus for whispers (see Non-Patent Document 4). Each speaker speaks 450 voice-balanced sentences, both in a normal utterance and a whisper, according to the TIMIT prompt. The number of speakers is 29, and the gender is balanced. The total number of used utterances is 11,324 (1,011 minutes). Furthermore, the corpus of the wTIMIT is accompanied by a normal voice, and can also be used for classification training of a whisper and a normal voice in the classification unit 101 (described later). The data is provided in two parts, training and test. In the present embodiment, the classification of training and test is used as it is.

Furthermore, Per-user database is voice data dubbed in a whisper by each user. The sequence of selected voice commands is used as a script. These phrases are assumed to be commands mainly used during text input. Each user repeats each phrase five times, and a total of 110 phrases are recorded. These phrases are further randomly concatenated and used as data sets. The total number of utterances after this concatenation is 936 (about 82 minutes).

Fine tuning is a learning technique well known in the art of training trained models to adjust for each task. Specifically, in fine tuning, after the model is learned using unlabeled data, parameters of the model are tuned using supervised data of a specific task to be further solved.

In the present embodiment, fine tuning of the whisper recognition neural network 400 is performed in two stages. In the first stage, the wTIMIT (whisper) is used for training, and in the second stage, a user-blowing whisper command set (data set of whispers for each user) is used.

Furthermore, as a training data set for the classification training of a whisper and a normal voice in the classification unit 101(alternatively, the feature extraction layer 410), voice data of a normal voice and a whisper included in wTIMIT are used (as described above, the corpus of wTIMIT is accompanied by a normal voice together with a whisper). The length of the voice supplied to the classification unit 101 is set to 1,600 samples (size of 100 milliseconds in 16Kps audio sampling). This is identical to the length of an audio chunk used by the speech recognition cloud service in a later stage.

### E. Application to Interaction System

In the voice input system 100 according to the present disclosure, a normal voice input is converted into text in the same manner as conventional voice input text creation. In contrast, when symbols such as "COMMA", "PERIOD", "QUOTE" are spoken in a whisper, the voice input system 100 treats these as symbols.

Furthermore, when "NEW LINES", which means to create a new line, is spoken in a whisper, the voice input system 100 treats it as a command and creates a new line for the text that is being input by voice.

In a case where there is a recognition error (for text input by normal voice), when "return" or "delete sentence" is whispered, the voice input system 100 can treat the whisper as a command and can delete the last word or change the word of interest.

Furthermore, when "MENU" is whispered, the voice input system 100 can treat the whisper as a command and can present another recognition candidate. The candidates on the menu are labeled 1, 2, or 3, and a favorite candidate can be selected from the menu by whispering "ONE", "TWO", "THREE", or the like.

According to the voice input system 100 according to the present disclosure, it is also possible to combine normal voice input and a whispering command. For example, when "SPELL" is whispered immediately after inputting the spelling "w a v 2 v e c" in a normal voice, the word "wav2vec2", which is quite difficult to enter in normal ASR, is generated. Similarly, emoji input is also possible by whispering "EMOTION" immediately after saying "smile" in a normal voice.

Of course, when "COMMA", "PERIOD", "QUOTE", "NEW LINES", "return", or "delete sentence" is spoken in a normal voice, the voice input system 100 converts such an input into text as in conventional voice input text creation, without treating the input as a symbol or a command.

A specific operation example of a voice input process using the voice input system 100 according to the present disclosure will be described with reference to Figs. 8 to 15. Figs. 8 to 15 are voice input-based text editing screens.

Figs. 8 to 10 illustrate operation examples in a case where a command is used by whispering while text is input in a normal voice. In the text editing screen illustrated in Fig. 8, a confirmed portion of the text input by normal voice is displayed with black characters, and an unconfirmed portion immediately after voice input is displayed with gray text. Here, the user whispers "MENU". The voice input system 100 treats the whisper "MENU" as a command. Specifically, the classification unit 101 classifies a voice waveform corresponding to "MENU" as a whisper, and the whisper recognition unit 102 recognizes that the voice waveform is a command "MENU".

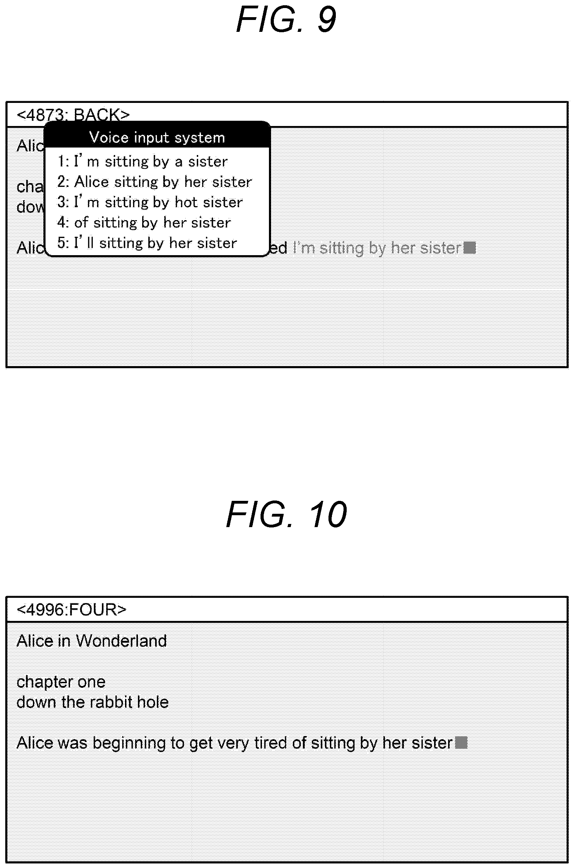

As illustrated in Fig. 9, the voice input system 100 displays, as a pop-up, a menu window listing voice recognition candidates of the text displayed in gray in the screen. In the illustrated menu window, five text conversion candidates for an unconfirmed input voice are displayed. In the voice input system 100, in response to the recognition result of the "MENU" command by the whisper recognition unit 102, the control unit 104 acquires text conversion candidates by the normal voice recognition unit 103 for a target (or the most recently input) normal voice, generates a menu window listing these conversion candidates, and displays, as a pop-up, the menu window on the text editing screen.

As illustrated in Fig. 9, the candidates on the menu are labeled 1, 2, or 3,...,and a favorite candidate can be selected from the menu by the user whispering "ONE", "TWO", "THREE",... or the like. Here, the user whispers "FOUR" and selects the fourth candidate "of sitting by her sister".

In the voice input system 100, the classification unit 101 classifies a voice waveform corresponding to "FOUR" as a whisper, and the whisper recognition unit 102 recognizes that the voice waveform is a command for selecting a fourth candidate of "FOUR". Then, when the control unit 104 confirms the selection of the fourth text conversion candidate in response to the recognition result of "FOUR", that is, the selection of the fourth candidate by the whisper recognition unit 102, as illustrated in Fig. 10, the menu window is closed, and the unconfirmed text displayed in gray on the text editing screen illustrated in Fig. 8 is replaced with the selected text candidate "of sitting by her sister" and displayed.

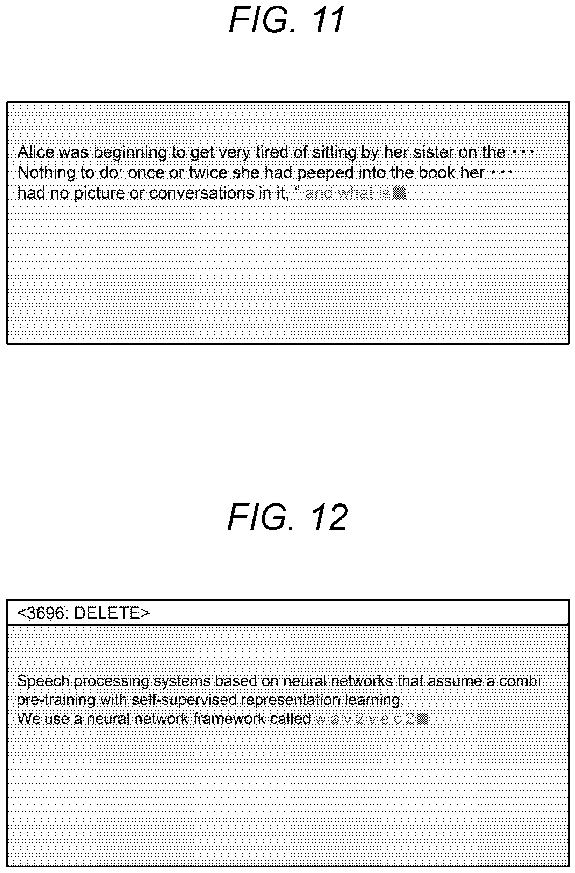

Next, with reference to Fig. 11, an operation in a case where symbols are input in a whisper while text is input in a normal voice will be described. As illustrated in Fig. 10, it is assumed that, after selecting a text conversion candidate using a whisper, the user continues inputting by normal voice for a while. In the voice input system 100, a voice waveform classified as a normal voice by the classification unit 101 is recognized by the normal voice recognition unit 103 and converted into text. Then, the control unit 104 sequentially concatenates the newly converted text to the end of the text the input of which has been confirmed on the text editing screen.

Here, it is assumed that the user utters "... conversations in it" in a normal voice, then subsequently utters "COMMA DOUBLE QUOTE" in a whisper, and further utters "and what is..." in a normal voice.

In the voice input system 100, the classification unit 101 classifies a speech waveform up to "... conversations in it" as a normal voice, the normal voice recognition unit 103 converts the speech waveform into text, and the control unit 104 displays the text up to "...conversations in it" on the text editing screen. Next, the classification unit 101 classifies a speech waveform corresponding to "COMMA DOUBLE QUOTE" as a whisper, and the whisper recognition unit 102 recognizes that the speech waveforms are symbol inputs of "COMMA" and "DOUBLE QUOTE". Then, in response to the recognition result of inputting the respective symbols "COMMA" and "DOUBLE QUOTE" by the whisper recognition unit 102, the control unit 104 sequentially concatenates the respective symbols, ",",and """ to the end of the text the input of which has been confirmed on the text editing screen as illustrated in Fig. 11. Note that, although not illustrated, special characters can also be input in a whisper by the similar method as symbol input.

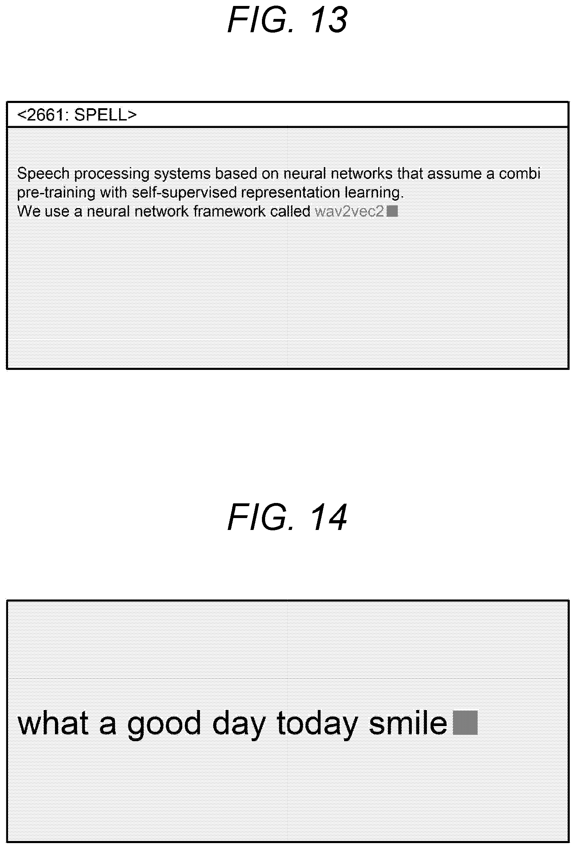

Figs. 12 and 13 illustrate an operation example of the voice input system 100 in which a word that is very difficult to input in normal ASR such as an abbreviation (or a word that has not yet been registered in the dictionary) is input by combining a normal voice input and a whisper command.

The user inputs the spelling "w a v 2 v e c 2" in a normal voice, and immediately thereafter utters "SPELL" in a whisper. In the voice input system 100, first, the classification unit 101 classifies a voice waveform corresponding to "w a v 2 v e c 2" as a normal voice, and the normal voice recognition unit 103 converts the voice waveform into alphabet characters "w", "a", "v", "2", "v", "e", "c", and "2". Then, in response to the recognition result of the spelling of the word by the normal voice recognition unit 103, as illustrated in Fig. 12, the control unit 104 sequentially concatenates each of the alphabet characters "w", "a", "v", "2", "v", "e", "c", and "2" to the end of the text the input of which has been confirmed on the text editing screen.

Subsequently, the classification unit 101 classifies a voice waveform corresponding to "SPELL" as a whisper, and when the whisper recognition unit 102 recognizes that the voice waveform is a command for instructing input of the spelling of the word "SPELL", the control unit 104 combines alphabet characters input immediately before in the order of the utterance to generate a word "wav2vec2". Then, in response to the recognition result of the spelling of the word by the whisper recognition unit 102, the control unit 104 concatenates the word "wav2vec2" to the end of the text the input of which has been confirmed on the text editing screen as illustrated in Fig. 13.

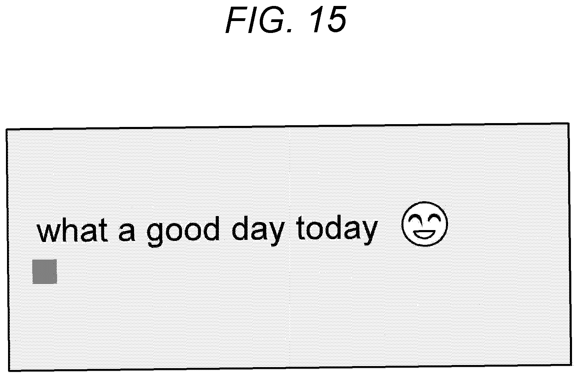

Figs. 14 and 15 illustrate an operation example of the voice input system 100 in which an emoji that is very difficult to input in normal ASR such as an abbreviation is input by combining a normal voice input and a whisper command.

It is assumed that, after uttering "what a good day today" in a normal voice, the user further continues to whisper "EMOTION" immediately after uttering the word "smile" in a normal voice.

In the voice input system 100, the classification unit 101 classifies the voice waveforms of "what a good day today" and "smile" as a normal voice, and the normal voice recognition unit 103 converts the voice waveform into a text "what a good day today smile". Then, as illustrated in Fig. 14, the control unit 104 displays the texts of up to "what a good day today" and "smile" on the text editing screen. Next, the classification unit 101 classifies the voice waveform corresponding to the word "EMOTION" as a whisper, and the whisper recognition unit 102 recognizes that the voice waveform is a command for instructing emoji input. Then, in response to the recognition result of the input of emoji by the whisper recognition unit 102, the control unit 104 converts the text "smile" at the end of the line into the emoji and displays the emoji on the text editing screen as illustrated in Fig. 15.

### F. Other Applications

In this Section F, some applications in which the present disclosure can be used other than the voice interaction input described in the Section E above will be described.

### F-1. Use of Whisper Commands in Teleconference

Other applications of the present disclosure include the use of voice commands during teleconferencing. It is assumed that a voice command is used during a teleconference. In order to prevent the commands from becoming part of utterances during the conference, the conference participants give the commands using a whisper.

Generally, in a teleconference, each participant is connected via a network such as TCP/IP and communicates a video of a face image and an uttered voice of each other in real time, and each participant views a real time face image and hears an uttered voice of another participant on his/her own conference terminal, and shares conference materials among the participants as necessary.

Moreover, when the present disclosure is applied to a teleconference, conference participants can give commands using whispering, and voice commands can be prevented from becoming part of utterances during the conference. That is, when a voice uttered by a conference participant is input to the voice input system 100, the classification unit 101 distinguishes between a whisper and a normal voice. Then, the whispering portion is sent to the whisper recognition unit 102, and command processing is performed on the basis of the recognition result. Furthermore, in order to prevent a whisper from becoming a part of utterances during the conference, after the whispering portion is deleted from the audio stream of the conference participant, the whisper is multiplexed with the video of the face image of the participant and transmitted to the conference terminals of the other participants in real time.

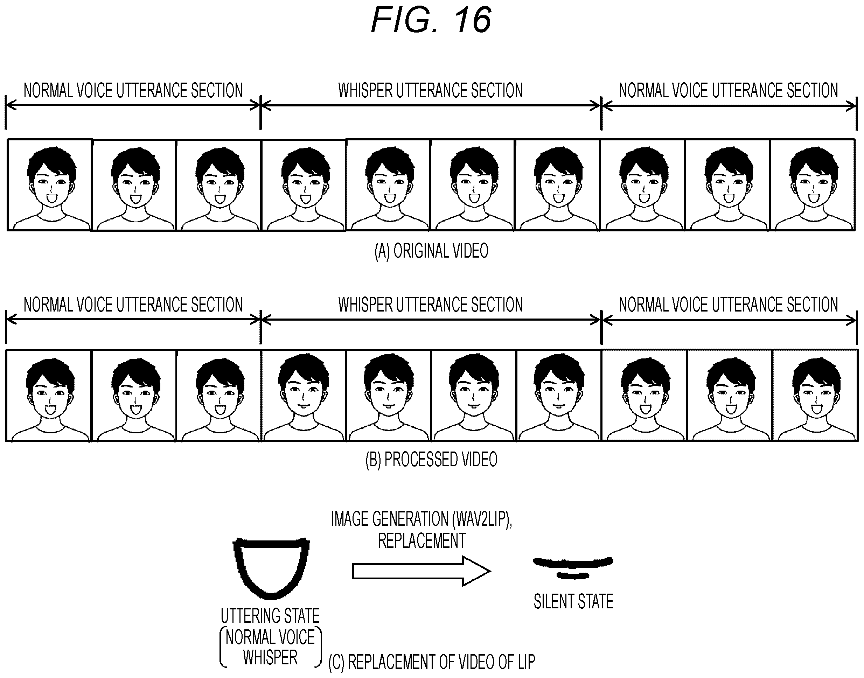

By the way, a mouth is moved in both the case of uttering a normal voice and a whisper. For this reason, there is a problem in that the video of moving the mouth while uttering a whisper (although the whispering portion is deleted) is seen from the other participants, which is unnatural. Fig. 16(A) exemplifies an original video of a participant who is uttering a normal voice and a whisper alternately. Although the section in which the whisper is being uttered is a silent section in which the other participants are not uttering, the mouth of the participant is moving similarly to the section in which the normal voice is heard, and thus the other participants viewing such a video feel unnatural.

Therefore, when the present disclosure is applied to a teleconference, as illustrated in Fig. 16(B), video processing is performed in which a lip portion of a video of a participant is replaced as if the participant is not uttering in a section in which the participant is uttering a whisper. As a result, the other participants view the video in which the mouth of the participant is not moving in the section in which the whispering portion is deleted and is in silence, and the information obtained from each of the hearing and the vision is matched, so that the other participants can observe the natural video.

For the purpose of replacing the lip portion of the video of the participant, lip images can be generated from utterances using deep learning, for example, using Wav2Lip (see Non-Patent Document 6). When the user speaks in a whisper, as illustrated in Fig. 16(C), the mouth portion of the face image is replaced with an image in a state where the mouth is closed and the user is silent from a state where the mouth is open and the user is uttering.

Using such a mechanism, both the face image stream and the audio stream can be adjusted so that the portion where the command is spoken in a whisper is invisible and inaudible to the other participants.

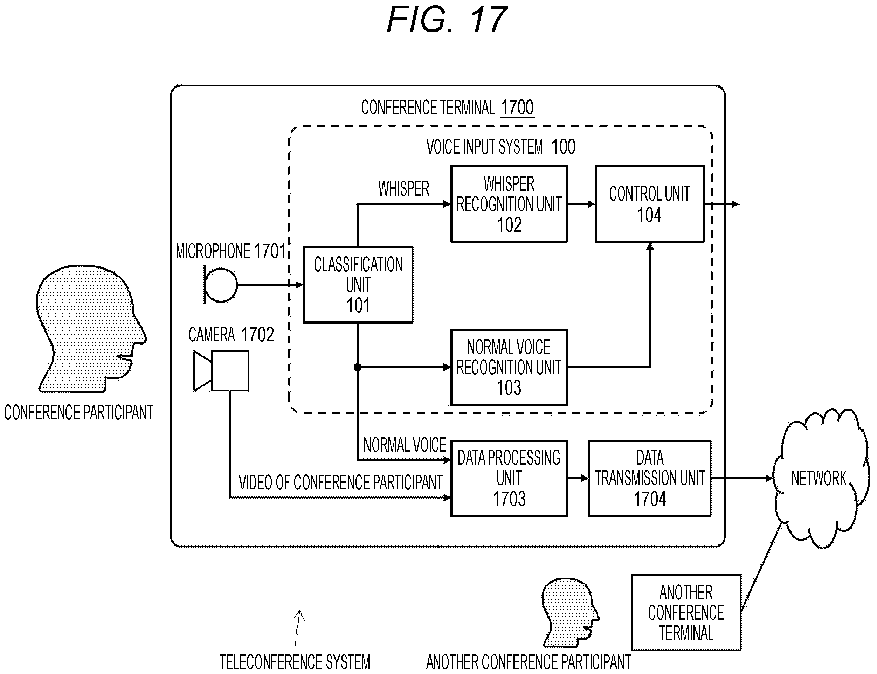

Fig. 17 illustrates a functional configuration example of a conference terminal 1700 to which the voice input system 100 according to the present disclosure is applied. However, in Fig. 17, in the conference terminal 1700, only the functional blocks on the input-side that capture videos and voices of the participants and transmit the videos and voices to other conference terminals are illustrated, and illustration of functional blocks on the output side that output the videos and voices received from the other conference terminals is omitted from the viewpoint of convenience of description and simplification of the drawings. Furthermore, among the functional blocks included in the conference terminal 1700, the same functional blocks as those included in the voice input system 100 illustrated in Fig. 1 are denoted by the same names and reference numerals.

The conference terminal 1700 further includes a microphone 1701, a camera 1702, a data processing unit 1703, and a data transmission unit 1704 in addition to the functional blocks of the voice input system 100.

The microphone 1701 inputs a voice uttered by the conference participant, and the camera 1702 captures an image of the conference participant.

The classification unit 101 classifies the voice of the conference participant input from the microphone 1701 into a normal voice and a whisper. The whisper recognition unit 102 recognizes a voice signal classified as a whisper and converts the voice signal into a command. The control unit 104 executes processing of the command recognized by the whisper recognition unit 102. The content of the command is not particularly limited. Furthermore, in a case where text input is not performed in the conference terminal 1700, the normal voice recognition unit 103 is unnecessary.

The data processing unit 1703 multiplexes and encodes the audio stream classified as a normal voice by the classification unit 101 and the video stream obtained by imaging the participants by the camera 1702 into a predetermined format (for example, moving picture experts group (MPEG) or the like).

As described above, the audio stream from which the whispering portion is deleted is input from the classification unit 101 to the data processing unit 1703. On the other hand, in the original video input from the camera 170 to the data processing unit 1703, the conference participant moves his/her mouth both in the case of uttering a normal voice and a whisper, and the video and the voice are not matched in the section in which the whispering portion is deleted. Therefore, as described with reference to Fig. 16(B), in the section in which the participant is uttering a whisper, the data processing unit 1703 performs video processing of replacing the lip portion of the video of the participant as if the participant is not speaking, for example, using Wav2Lip, and then performs multiplexing and encoding processing with the audio stream.

Then, the data communication unit 1704 transmits the data (video/audio stream) processed by the data processing unit 1703 to another conference terminal via the network according to a predetermined communication protocol such as TCP/IP.

By adjusting both the face image stream and the audio stream in the conference terminal 1700, in the other conference terminal, which is the reception side, it is possible to hear a clear normal voice in which a whisper is not heard, and it is possible to view a natural video in which the movement of the mouth of the portion where the command is uttered by the whisper cannot be seen.

### F-2. Control of a Plurality of Avatars

As still another application of the present disclosure, one user can simultaneously control a plurality of avatars in a virtual space.

An example of the simultaneous control of the plurality of avatars allows a first avatar to speak in a normal voice of the user, and a second avatar to operate using a whisper of the user. The term here, "operation" of the avatar, includes various motions of the avatar, such as body motions and an utterance of the avatar.

Furthermore, another example of the simultaneous control of the plurality of avatars allows the first avatar to utter using a normal voice of the user, and the second avatar to utter using a whisper of the user. However, since it is difficult to hear a whisper itself, for example, the whisper may be converted into a normal voice by using the voice conversion techniques disclosed in Non-Patent Document 7 and Non-Patent Document 8 and used the normal voice as the voice of the avatar.

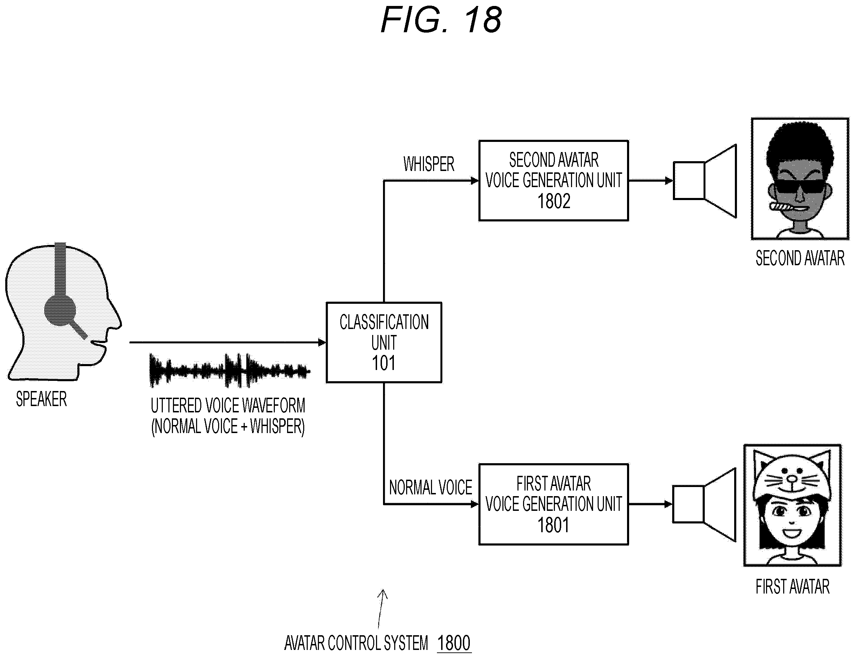

Fig. 18 schematically illustrates a functional configuration example of an avatar control system 1800 that is configured by incorporating the functions of the voice input system 100 according to the present disclosure and simultaneously control a plurality of avatars. However, among the functional blocks included in the avatar control system 1800, the same functional blocks as those included in the voice input system 100 illustrated in Fig. 1 are denoted by the same names and reference numerals.

The operation of the avatar control system 1800 in a case where the first avatar utters using a normal voice of the user and the second avatar utters using a whisper of the user will be described.

The classification unit 101 classifies a user's voice input from a microphone or a headset into a normal voice and a whisper. A first avatar voice generation unit 1801 applies voice conversion to the voice signal classified as a normal voice by the classification unit 101, and generates the voice of the first avatar. Any algorithm is available for converting a normal voice into another voice, and thus a currently available voice changer may be utilized.

Furthermore, a second avatar voice generation unit 1802 converts the voice signal classified as a whisper by the classification unit 101 into a normal voice, and generates the voice of the second avatar. For example, a whisper may be converted into another normal voice using the voice conversion technique disclosed in Non-Patent Document 7 and Non-Patent Document 8 and the other normal voice may be used as an avatar utterance.

### F-3. Combination with Silent Speech

Silent speech is an interface that allows voice input without being noticed by the surroundings with an unvoiced sound or a small voice, and the main purpose is to prevent a voice of a voice command from becoming noise in the surroundings and protecting privacy by not disclosing confidential information. The sound pressure level of a typical conversation is about 60dB, whereas the sound pressure level of a whisper is 30 to 40dB. In this way, the purpose of silent speech can be greatly achieved by using a whisper as an utterance command.

For example, in order to protect from air pollution and infectious diseases, a mask that enables powered ventilation for breathing has been proposed (see Patent Document 2). By incorporating the functions of the voice input system 100 according to the present disclosure into such a mask, a mask-type wearable interface can be realized. In the case of a mask-type wearable interface, since a microphone can be arranged at the mouth, even a whisper with a low sound pressure level can be captured.

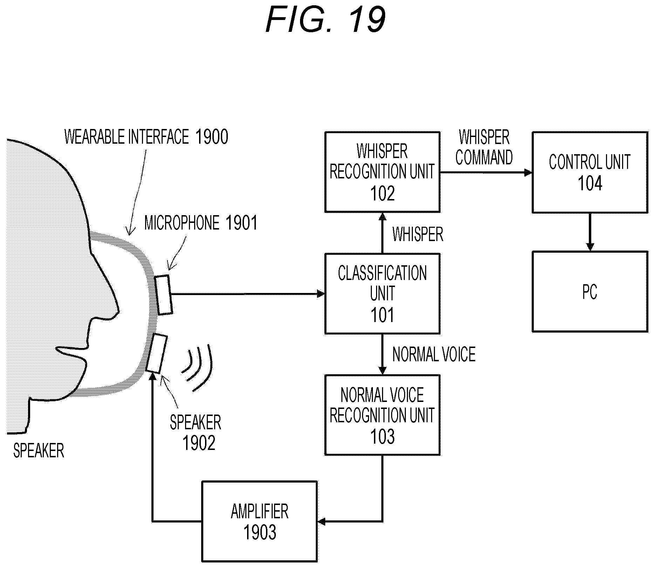

Fig. 19 illustrates a functional configuration example of a mask-type wearable interface 1900 incorporating the functions of the voice input system 100 according to the present disclosure. However, among the functional blocks included in the wearable interface 1900, the same functional blocks as those included in the voice input system 100 illustrated in Fig. 1 are denoted by the same names and reference numerals.

In the wearable interface 1900, at least a microphone 1901 and a speaker 1902 are mounted on a mask-type main body. At least some components of the voice input system 100 such as the classification unit 101 and the whisper recognition unit 102 may also be mounted in the wearable interface 1900, and the functions of the voice input system 100 may be disposed outside the wearable interface 1900.

The classification unit 101 classifies a user's voice input from the microphone 1901 into a normal voice and a whisper. The whisper recognition unit 102 recognizes the voice command from the voice signal classified as a whisper by the classification unit 101. Then, the control unit 104 performs processing of the whisper command. Here, the content of the whisper command is not particularly limited. The whisper command may be processing for a normal voice input from the microphone 1901, or may be a command for a personal computer (PC) connected to the wearable interface 1900 or another information terminal. In the case of the mask-type wearable interface 1900, a whisper with a low sound pressure level can also be captured using the microphone 1901 disposed at the mouth, so that it is possible to prevent missing a voice command.

On the other hand, the voice signal classified as a normal voice by the classification unit 101 is amplified by the amplifier 1903 and then output as audio from the mask, that is, the speaker 1902 attached to the wearable interface 1900. Since the mouth of the user is covered by wearing the mask-type wearable interface 1900, it is difficult to hear a normal voice, but attenuation of the voice by the mask can be compensated by amplifying the voice with the speaker 1902.

According to the mask-type wearable interface 1900, it is possible to achieve an effect substantially equivalent to a silent utterance by capturing a whisper with a microphone in a mask. That is, by introducing the voice input system 100 according to the present disclosure into a mask that is always worn, it is possible to construct an audio interface that is always available without disturbing normal conversation.

Furthermore, according to the mask-type wearable interface 1900, there is a possibility of using three modalities of silent speech, normal voice, and whispering. For example, if lip reading or whispering can be recognized, three types of utterance modalities can be obtained together with normal utterance.

### G. Comparison with Prior Art

In this Section G, comparison results between the prior art searched by the present applicant and the present disclosure and advantages of the present disclosure will be described.

Non-Patent Document 9 discloses "speech shift" that specifies a mode of voice input by intentionally controlling a voice pitch. In the speech shift, when the fundamental frequency (F0) of an utterance exceeds a specified threshold value, it is determined as another mode. In the speech shift, the user needs to speak at an unnaturally high pitch to stably recognize two voice input modes. In the first place, it is difficult for the user to understand the frequency to use the pitch properly. On the other hand, according to the present disclosure, switching between a whisper and a normal utterance is more natural, and can be performed more clearly without setting a (user unknown) threshold.

Non-Patent Document 10 discloses a method for automatically detecting a buried (uttered) pause, which is one of hesitation phenomena of an utterance of a voice command, and suggesting a candidate that can fill the command. According to this method, for example, when the user says "play, Beeee..." and then stops saying, the system can detect "eeee" as a pause filled with hesitation voice and suggest a filled candidate such as "Beatles" or "Beach". However, this method shows the possibility of indicating a nonverbal intent in speech, but only uses hesitation and cannot use arbitrary commands as in the present disclosure. Moreover, performing a pause uttered in this method is possible only after the vowel in the utterance, not after the consonants.

In a technique called "PrivateTalk" disclosed in Non Patent Literature 11, a hand partially covering a mouth from one side is used to activate a voice command. The main purpose of PrivateTalk is to protect privacy, but PrivateTalk can also be used to distinguish between a normal utterance (without covering by hand) and a command (covering by hand). However, since explicit hand gestures are required, PrivateTalk differs from the present disclosure in that PrivateTalk is no longer a "hands-free" interaction. Moreover, two microphones (connected to left and right earphones) are required for PrivateTalk to recognize the effect of the hand cover. On the other hand, in the present disclosure, only one standard microphone is sufficient. Furthermore, according to the present disclosure, privacy can be protected in a natural and effective manner of covering the mouth and speaking in a whisper.

In a technique called "DualBreath" disclosed in Non Patent Literature 12, breathing is used as a command to distinguish whether air is inhaled or exhaled simultaneously from the nose and the mouth, thereby distinguishing it from normal exhalation. DualBreath can represent a trigger of only pressing a button, but not as rich a command as a whisper as the present disclosure.

"ProxiMic" disclosed in Non Patent Literature 13 is a sensing technology for detecting an utterance of the user with a microphone device arranged near the mouth, and is intended to be used as an utterance of "wake-up-free" such as "Raise-to-Speak" in a smart speaker or a similar voice control device. However, ProxiMic requires a physical movement such as moving the microphone near the mouth, and thus it is not easy to mix a normal utterance and an utterance near the mouth.

Non-Patent Document 14 discloses a technology called "SilentVoice" in which a voice can be input using "ingressive speech" that is uttered while being inhaled. SilentVoice is mainly designed for silent utterances, but can also distinguish between a normal utterance and an intruding sound. However, a special microphone needs to be placed close to the mouth, and training is required for the user to correctly speak in the inhalation mode. Moreover, it is difficult for a person to frequently switch between a normal utterance and an inhalation utterance.

In some voice input systems, such as Cloud Speech-to-Text provided by Google Inc. as a cloud service, ". (punctuation)" can be input by uttering "period". However, in order to distinguish this utterance from a "period" in a sentence, it is necessary to leave a certain pause before and after the utterance, and the overall input speed decreases.

There are some studies on the recognition of whispering, but none have been considered for the use of a mixture of normal voice and whispering.

The Alexa smart speaker supports the whisper mode. In a case where this mode is set, when the user speaks to Alexa in a whisper, Alexa also responds in a whisper, but the voice command is not input in a whisper as in the present disclosure.

### H. Configuration of Information Processing Device

In this Section H, an information processing device used to implement the voice input system 100 according to the present disclosure and to further implement the various applications of the present disclosure introduced in the above Section F will be described.

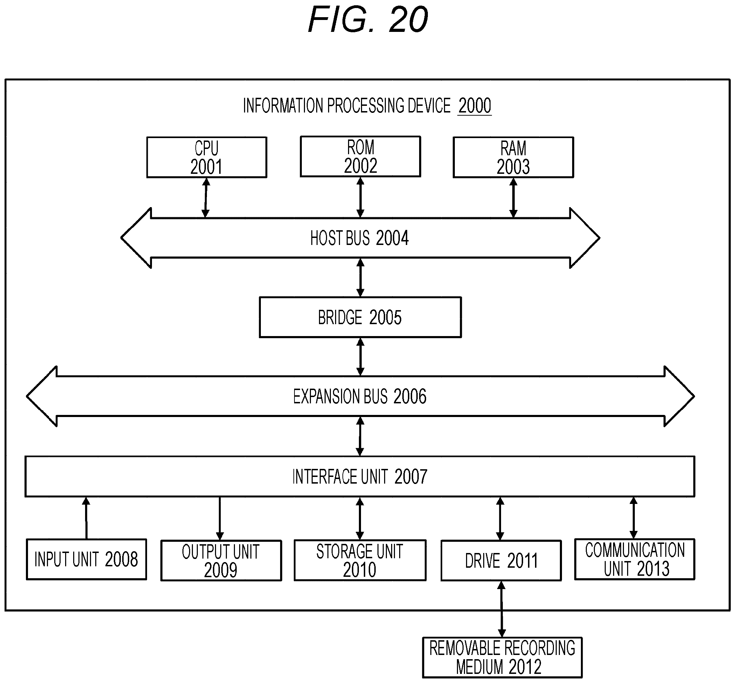

Fig. 20 illustrates a configuration example of an information processing device 2000 that performs classification between a normal voice and a whisper and recognition of a whisper, or realizes various applications using the recognition result of a whisper. Furthermore, the information processing device 2000 can also be used as the conference terminal 1700 described in Section F-1 above.

The information processing device 2000 illustrated in Fig. 20 includes a central processing unit (CPU) 2001, a read only memory (ROM) 2002, a random access memory (RAM) 2003, a host bus 2004, a bridge 2005, an expansion bus 2006, an interface unit 2007, an input unit 2008, an output unit 2009, a storage unit 2010, a drive 2011, and a communication unit 2013.

The CPU 2001 functions as an arithmetic processing device and a control device, and controls the overall operation of the information processing device 2000 according to various programs. The ROM 2002 stores programs (a basic input/output system, etc.) and calculation parameters used by the CPU 2001 in a nonvolatile manner. The RAM 2003 is used to load a program to be used in execution of the CPU 2001 and temporarily store parameters such as work data that appropriately changes during program execution. Examples of the program loaded into the RAM 2003 and executed by the CPU 2001 include various application programs, an operating system (OS), and the like.

The CPU 2001, the ROM 2002, and the RAM 2003 are interconnected by the host bus 2004 including a CPU bus or the like. Then, the CPU 2001 operates in conjunction with the ROM 2002 and the RAM 2003 to execute various application programs under the execution environment provided by the OS, thereby enabling various functions and services to be implemented. In a case where the information processing device 100 is a personal computer, the OS is, for example, Windows of Microsoft Corporation or Unix. In a case where the information processing device 2000 is an information terminal such as a smartphone or a tablet, the OS is, for example, iOS of Apple Inc. or Android of Google Inc. Furthermore, the application program includes an application that classifies between a normal voice and a whisper and recognizes a whisper, and various applications that use the recognition result of a whisper.

The host bus 2004 is connected to the expansion bus 2006 via the bridge 2005. The expansion bus 2006 is, for example, a peripheral component interconnect (PCI) bus or PCI Express, and the bridge 2005 is based on the PCI standard. However, the information processing device 2000 does not necessarily have a configuration in which circuit components are separated by the host bus 2004, the bridge 2005, and the expansion bus 2006, and thus may be configured in such a way that almost all circuit components are implemented by being interconnected using a single bus (not illustrated).

The interface unit 2007 connects peripheral devices such as the input unit 2008, the output unit 2009, the storage unit 2010, the drive 2011, and the communication unit 2013 according to the standard of the expansion bus 2006. However, all of the peripheral devices illustrated in Fig. 20 are not necessarily essential, and the information processing device 2000 may further include a peripheral device (not illustrated). Furthermore, the peripheral device may be built in the main body of the information processing device 2000, or some peripheral devices may be externally connected to the main body of the information processing device 2000.

The input unit 2008 includes an input control circuit that generates an input signal on the basis of an input from a user and outputs the input signal to the CPU 2001, and the like. In a case where the information processing device 2000 is a personal computer, the input unit 2008 may include a keyboard, a mouse, and a touch panel, and may further include a camera and a microphone. Furthermore, in a case where the information processing device 2000 is an information terminal such as a smartphone or a tablet, the input unit 2008 is, for example, a touch panel, a camera, or a microphone, and may further include another mechanical operator such as a button. However, when hands-free voice interaction using a normal voice and a whisper is performed, an input device other than a microphone is almost unnecessary.

The output unit 2009 includes, for example, a display device such as a liquid crystal display (LCD) device, an organic electro-luminescence (EL) display device, and a light emitting diode (LED). As in the present embodiment, in a case where voice interaction is performed on the information processing device 2000, text input by normal voice, special characters such as symbols input using a whisper, and an execution result of an editing command such as deletion or line feed are presented using a display device. Furthermore, the output unit 2009 may include an audio output device such as a speaker and a headphone, and output at least a part of a message to the user displayed on the UI screen as an audio message.

The storage unit 2010 stores files such as programs (application, OS, etc.) to be executed by the CPU 2001 and various pieces of data. The data stored in the storage unit 2010 may include a corpus of normal voices and whispers (described above) for training of a neural network. Although the storage unit 2010 includes, for example, a mass storage device such as a solid state drive (SSD) or a hard disk drive (HDD), the storage unit 2010 may include an external storage device.

A removable recording medium 2012 is a cartridge-type recording medium such as a microSD card, for example. The drive 2011 performs reading and writing operations on a removable storage medium 113 loaded therein. The drive 2011 outputs data read from the removable recording medium 2012 to the RAM 2003 and the storage unit 2010, and writes data on the RAM 2003 and the storage unit 2010 to the removable recording medium 2012.

The communication unit 2013 is a device that performs wireless communication such as Wi-Fi (registered trademark), Bluetooth (registered trademark), or a cellular communication network such as 4G or 5G. Furthermore, the communication unit 2013 also include a terminal such as a universal serial bus (USB) or a high-definition multimedia interface (HDMI) (registered trademark), and may further include a function of performing HDMI (registered trademark) communication with a USB device such as a scanner or a printer, a display, or the like.

Although a personal computer (PC) is assumed as the information processing device 2000, the number of PCs is not limited to one, and the voice input system 100 illustrated in Fig. 1 may be implemented with two or more PCs that are distributed, or the PC may be configured to execute processing of various applications introduced in Section F above.

### I. Conclusions

Finally, advantages of the present disclosure and effects brought by the present disclosure will be summarized.

(1) According to the present disclosure, it is possible to realize a voice input system capable of inputting a non-text command with a whisper and inputting a text with a normal voice. According to the voice input system of the present disclosure, a normal voice input is used for text input, and various commands can be input only by whispering. In order to realize the present disclosure, special hardware other than a normal microphone is not required, and the present disclosure can be used in a wide range of situations in which speech recognition is already available.
(2) Moreover, according to the present disclosure, two beneficial neural networks can be provided. One is a neural network that can be used to distinguish between a whisper and a normal voice, and the other is a neural network that can be used to recognize a whisper. Regarding the latter, excellent whisper recognition accuracy can be realized by finely tuning a model pre-trained with a normal voice with a whisper.

### CITATION LIST

### PATENT DOCUMENT

Patent Document 1: Japanese Patent Application Laid-Open No. 2015-219480
Patent Document 2: Japanese Translation of PCT International Application Publication No. 2019-524331

### NON-PATENT DOCUMENT

Non-Patent Document 1: Alexei Baevski, Henry Zhou, Abdelrahman Mohamed, and Michael Auli. 2020.wav2vec 2.0: A Framework for Self-Supervised Learning of Speech Representations. arXiv [cs.CL] (June 2020).
Non-Patent Document 2: Cheng Yi, JianzhongWang, Ning Cheng, Shiyu Zhou, and Bo Xu. 2020. Applying Wav2vec2.0 to Speech Recognition in Various Low-resource Languages. (Dec. 2020). arXiv:2012.12121 [cs.CL]
Non-Patent Document 3: Wei-Ning Hsu, Benjamin Bolte, Yao-Hung Hubert Tsai, Kushal Lakhotia, Ruslan Salakhutdinov, and Abdelrahman Mohamed. 2021. HuBERT: Self-Supervised Speech Representation Learning by Masked Prediction of Hidden Units. (June 2021). arXiv:2106.07447 [cs.CL] Non-Patent Document 4: Boon Pang Lim. 2010. Computational differences between whispered and non-whispered speech. Ph.D. Dissertation. University of Illinois Urbana-Champaign.
Non Patent Document 5: Vassil Panayotov, Guoguo Chen, Daniel Povey, and Sanjeev Khudanpur. 2015. Librispeech: An ASR corpus based on public domain audio books. In 2015 IEEE International Conference on Acoustics, Speech and Signal Processing (ICASSP). 5206-5210. https://doi.org/10.1109/ICASSP.2015.7178964
Non Patent Document 6: K R Prajwal, Rudrabha Mukhopadhyay, Vinay P. Namboodiri, and C.V. Jawahar. 2020. A Lip Sync Expert Is All You Need for Speech to Lip Generation In the Wild. In Proceedings of the 28th ACM International Conference on Multimedia (Seattle, WA, USA) (MM '20). Association for Computing Machinery, New York, NY, USA, 484-492. https://doi.org/10.1145/3394171.3413532
Non-Patent Document 7: Abhishek Niranjan, Mukesh Sharma, Sai Bharath Chandra Gutha, and M Ali Basha Shaik. 2020. End-to-End Whisper to Natural Speech Conversion using Modified Transformer Network. https://doi.org/10.48550/ARXIV.2004.09347
Non-Patent Document 8: Santiago Pascual, Antonio Bonafonte, Joan Serra, and Jose A. Gonzalez. 2018. Whispered-to-voiced Alaryngeal Speech Conversion with Generative Adversarial Networks. https://doi.org/10.48550/ARXIV.1808.10687
Non-Patent Document 9: Masataka Goto, Yukihiro Omoto, Katunobu Itou, and Tetsunori Kobayashi. 2003. Speech shift: direct speech-input-mode switching through intentional control of voice pitch. In 8th European Conference on Speech Communication and Technology, EUROSPEECH 2003 - INTERSPEECH 2003, Geneva, Switzerland, September 1-4, 2003.
Non-Patent Document 10: Masataka Goto. 1999. A Real-time Filled Pause Detection System for Spontaneous Speech Recognition. Proc. of Eurospeech '99 (1999).
Non-Patent Document 11: Yukang Yan, Chun Yu, Yingtian Shi, and Minxing Xie. 2019. PrivateTalk: Activating Voice Input with Hand-On-Mouth Gesture Detected by Bluetooth Earphones. In Proceedings of the 32nd Annual ACM Symposium on User Interface Software and Technology (New Orleans, LA, USA) (UIST '19). Association for Computing Machinery, New York, NY, USA, 1013-1020. https://doi.org/10.1145/3332165.3347950
Non-Patent Document 12: Ryoya Onishi, Tao Morisaki, Shun Suzuki, Saya Mizutani, Takaaki Kamigaki, Masahiro Fujiwara, Yasutoshi Makino, and Hiroyuki Shinoda. 2021. DualBreath: Input Method Using Nasal and Mouth Breathing. In Augmented Humans Conference 2021 (Rovaniemi, Finland) (AHs'21). Association for Computing Machinery, New York, NY, USA, 283-285
Non-Patent Document 13: Yue Qin, Chun Yu, Zhaoheng Li, Mingyuan Zhong, Yukang Yan, and Yuanchun Shi. 2021. ProxiMic: Convenient Voice Activation via Close-to-Mic Speech Detected by a Single Microphone. In Proceedings of the 2021 CHI Conference on Human Factors in Computing Systems. Association for Computing Machinery, New York, NY, USA, 1-12.
Non-Patent Document 14: Masaaki Fukumoto. 2018. SilentVoice: Unnoticeable Voice Input by Ingressive Speech. In Proceedings of the 31st Annual ACM Symposium on User Interface Software and Technology (Berlin, Germany) (UIST '18). Association for Computing Machinery, New York, NY, USA, 237-246.

### INDUSTRIAL APPLICABILITY

The present disclosure has been described in detail with reference to the specific embodiments. However, it is obvious that those skilled in the art can make modifications and substitutions of the embodiment without departing from the scope of the present disclosure.

The present disclosure can be applied to various applications such as automatic speech recognition (ASR), commands using whispering in teleconferences, voice switching of a plurality of avatars, and a combination with silent speech.

In short, the present disclosure has been described in an illustrative manner, and the contents disclosed in the present specification should not be interpreted in a limited manner. To determine the subject matter of the present disclosure, the claims should be taken into consideration.

Note that the present disclosure may also have the following configurations.
(1) An information processing device including:
   a classification unit that classifies an uttered voice into a normal voice and a whisper on the basis of a voice feature amount;
   a recognition unit that recognizes a whisper classified by the classification unit; and
   a control unit that controls processing based on a recognition result of the recognition unit.
(2) The information processing device according to (1),
   in which the classification unit performs classification between a normal voice and a whisper using a first learned neural network, and
   the recognition unit recognizes a whisper using a second learned neural network.
(3) The information processing device according to (2),
   in which the second learned neural network includes wave2vec2.0 or HuBERT.
(4) The information processing device according to any one of (2) and (3),
   in which the second learned neural network is pre-trained with a normal voice corpus and then fine tuning by whispering is performed.
(5) The information processing device according to (4),
   in which the fine tuning includes first-stage fine tuning using a general-purpose whisper corpus and second-stage fine tuning using a database of whispers for each user.
(6) The information processing device according to any one of (2) to (5),
   in which the second learned neural network includes a feature extraction layer and a transformer layer, and
   the first learned neural network is configured to share the feature extraction layer with the second learned neural network.
(7) The information processing device according to any one of (1) to (6), further including
   a normal voice recognition unit that recognizes a normal voice classified by the classification unit,
   in which the control unit performs processing corresponding to a recognition result of a whisper by the recognition unit on a recognition result of the normal voice recognition unit.
(8) The information processing device according to (7),
   in which the control unit executes processing of a whisper command recognized by the recognition unit on a text obtained by converting a normal voice by the normal voice recognition unit.
(9) The information processing device according to (8),
   in which the control unit executes at least one of input of a symbol or a special character for the text, selection of a text conversion candidate, deletion of the text, or line feed of the text on the basis of the whisper command.
(10) The information processing device according to any one of (8) and (9),
   in which when a plurality of characters is uttered in a normal voice and then "SPELL" is uttered in a whisper, the recognition unit recognizes that the whisper is a command to instruct to input a spelling of a word, and the control unit generates a word by concatenating the plurality of characters in an order of the utterance.
(11) The information processing device according to any one of (8) to (10),
   in which in response to the recognition unit recognizing a whisper command instructing emoji input, the control unit converts a normal voice immediately before the whisper into an emoji.
(12) The information processing device according to any one of (1) to (11),
   in which the control unit removes a voice classified as a whisper from an original uttered voice and transmits the uttered voice from which the voice classified as a whisper has been removed to an external device.
(13) The information processing device according to (12),
   in which the control unit performs processing of replacing a lip portion of a video of a speaker in a section classified as a whisper by the classification unit with a video in which the speaker is not uttering.
(14) The information processing device according to any one of (1) to (13), further including:
   a first voice generation unit that generates a voice of a first avatar on the basis of a voice classified as a normal voice by the recognition unit; and
   a second voice generation unit that generates a voice of a second avatar on the basis of a voice classified as a whisper by the recognition unit.
(15) The information processing device according to any one of (1) to (14), further including:
   a microphone and a speaker mounted on a mask worn by a speaker; and
   an amplifier that amplifies a voice signal classified as a normal voice by the classification unit,
   in which the voice signal amplified by the amplifier is output from the speaker.
(16) An information processing method including:
   a classification step of classifying an uttered voice into a normal voice and a whisper on the basis of a voice feature amount;
   a recognition step of recognizing a whisper classified in the classification step; and
   a control step of controlling processing based on a recognition result in the recognition step.
(17) A computer program written in a computer-readable format for causing a computer to function as:
   a classification unit that classifies an uttered voice into a normal voice and a whisper on the basis of a voice feature amount;
   a recognition unit that recognizes a whisper classified by the classification unit; and
   a control unit that controls processing based on a recognition result of the recognition unit.

### REFERENCE SIGNS LIST

- 100: Voice input system
- 101: Classification unit
- 102: Whisper recognition unit
- 103: Normal voice recognition unit
- 104: Control unit
- 400: Whisper recognition neural network
- 410: Feature extraction layer
- 411: Normalization layer (Layer Norm)
- 412: Average pooling layer (Avg Pool)
- 413, 414: Fully connected (FC) layer
- 415: Output layer (LogSoftmax)
- 420: Transformer layer
- 430: Projection layer
- 440: CTC layer
- 701: Normalization layer (gMLP)
- 702: Average pooling layer (Avg Pool)
- 703: Fully connected (FC) layer
- 704: Output layer (LogSoftmax)
- 1700: Conference terminal
- 1701: Microphone
- 1702: Camera
- 1703: Data processing unit
- 1704: Data transmission unit
- 1800: Avatar control system
- 1801: First avatar voice generation unit
- 1802: Second avatar voice generation unit
- 1900: Wearable interface
- 1901: Microphone
- 1902: Speaker
- 1903: Amplifier
- 2000: Information processing device
- 2001: CPU
- 2002: ROM
- 2003: RAM
- 2004: Host bus
- 2005: Bridge
- 2006: Expansion bus
- 2007: Interface unit
- 2008: Input unit
- 2009: Output unit
- 2010: Storage unit
- 2011: Drive
- 2012: Removable recording medium
- 2013: Communication unit

## Claims

1. An information processing device comprising:
a classification unit that classifies an uttered voice into a normal voice and a whisper on a basis of a voice feature amount;
a recognition unit that recognizes a whisper classified by the classification unit; and
a control unit that controls processing based on a recognition result of the recognition unit.

2. The information processing device according to claim 1,
wherein the classification unit performs classification between a normal voice and a whisper using a first learned neural network, and
the recognition unit recognizes a whisper using a second learned neural network.

3. The information processing device according to claim 2,
wherein the second learned neural network includes wave2vec2.0 or HuBERT.

4. The information processing device according to claim 2,
wherein the second learned neural network is pre-trained with a normal voice corpus and then fine tuning by whispering is performed.

5. The information processing device according to claim 4,
wherein the fine tuning includes first-stage fine tuning using a general-purpose whisper corpus and second-stage fine tuning using a database of whispers for each user.

6. The information processing device according to claim 2,
wherein the second learned neural network includes a feature extraction layer and a transformer layer, and
the first learned neural network is configured to share the feature extraction layer with the second learned neural network.

7. The information processing device according to claim 1, further comprising
a normal voice recognition unit that recognizes a normal voice classified by the classification unit,
wherein the control unit performs processing corresponding to a recognition result of a whisper by the recognition unit on a recognition result of the normal voice recognition unit.

8. The information processing device according to claim 7,
wherein the control unit executes processing of a whisper command recognized by the recognition unit on a text obtained by converting a normal voice by the normal voice recognition unit.

9. The information processing device according to claim 8,
wherein the control unit executes at least one of input of a symbol or a special character for the text, selection of a text conversion candidate, deletion of the text, or line feed of the text on a basis of the whisper command.

10. The information processing device according to claim 8,
wherein when a plurality of characters is uttered in a normal voice and then "SPELL" is uttered in a whisper, the recognition unit recognizes that the whisper is a command to instruct to input a spelling of a word, and the control unit generates a word by concatenating the plurality of characters in an order of the utterance.

11. The information processing device according to claim 8,
wherein in response to the recognition unit recognizing a whisper command instructing emoji input, the control unit converts a normal voice immediately before the whisper into an emoji.

12. The information processing device according to claim 1,
wherein the control unit removes a voice classified as a whisper from an original uttered voice and transmits the uttered voice from which the voice classified as a whisper has been removed to an external device.

13. The information processing device according to claim 12,
wherein the control unit performs processing of replacing a lip portion of a video of a speaker in a section classified as a whisper by the classification unit with a video in which the speaker is not uttering.

14. The information processing device according to claim 1, further comprising:
a first voice generation unit that generates a voice of a first avatar on a basis of a voice classified as a normal voice by the recognition unit; and
a second voice generation unit that generates a voice of a second avatar on a basis of a voice classified as a whisper by the recognition unit.

15. The information processing device according to claim 1, further comprising:
a microphone and a speaker mounted on a mask worn by a speaker; and
an amplifier that amplifies a voice signal classified as a normal voice by the classification unit,
wherein the voice signal amplified by the amplifier is output from the speaker.

16. An information processing method comprising:
a classification step of classifying an uttered voice into a normal voice and a whisper on a basis of a voice feature amount;
a recognition step of recognizing a whisper classified in the classification step; and
a control step of controlling processing based on a recognition result in the recognition step.

17. A computer program written in a computer-readable format for causing a computer to function as:
a classification unit that classifies an uttered voice into a normal voice and a whisper on a basis of a voice feature amount;
a recognition unit that recognizes a whisper classified by the classification unit; and
a control unit that controls processing based on a recognition result of the recognition unit.
